# FASCICULE DE BREVET EUROPEEN

(11) **EP 0 808 425 B1**
(45) Date de publication et mention de la délivrance du brevet: **23.12.1998**
(21) Numéro de dépôt: 96902313.4
(22) Date de dépôt: 30.01.1996
(51) Int. Cl.: F15C 1/22, G01F 1/32

(54) **PROCEDE DE CONDITIONNEMENT D'UN ECOULEMENT D'UN FLUIDE ET CONDITIONNEUR D'ECOULEMENT DU FLUIDE**
VERFAHREN ZUM KONDITIONIEREN EINER FLÜSSIGKEITSSTRÖMUNG UND BEHANDLUNGSVORRICHTUNG EINER FLÜSSIGKEITSSTRÖMUNG
FLUID FLOW CONDITIONING METHOD AND FLUID FLOW CONDITIONER

(30) Priorité: 06.02.1995 FR 9501425
(43) Date de publication de la demande: 26.11.1997
(73) Titulaire: SCHLUMBERGER INDUSTRIES S.A., 92120 Montrouge (FR)
(72) Inventeur: HOCQUET, Philippe, F-92170 Vanves (FR); PARRY, Andrew, John, F-92160 Antony (FR)
(86) Numéro de dépôt international: FR9600160
(87) Numéro de publication internationale: WO9624774

(56) Documents cités:
- EP-A- 0 503 462
- DE-A- 2 232 074
- FR-A- 2 663 417
- FR-A- 2 690 717
- GB-A- 2 002 904
- GB-A- 2 235 064
- US-A- 3 951 171

## Description

La présente invention est relative à un procédé de conditionnement d'un écoulement d'un fluide d'une première zone vers une deuxième zone située en aval de ladite première zone ainsi qu'à un conditionneur d'écoulement d'un fluide destiné à être placé en amont d'un dispositif de détermination d'une quantité volumique du fluide par rapport au sens d'écoulement dudit fluide.

Il est connu de placer en amont d'un dispositif de détermination d'une quantité volumique d'un fluide en écoulement qui comprend un bloc de mesure un conditionneur d'écoulement afin d'homogénéiser la distribution des vitesses dans ledit écoulement et de détruire les structures tourbillonnaires présentes dans celui-ci pour que ledit écoulement présente les mêmes caractéristiques à l'entrée du dispositif quelles que soient les caractéristiques de régime et de débit de l'écoulement à l'entrée du conditionneur.

Un conditionneur d'écoulement est particulièrement recommandé lorsque le dispositif est de type statique c'est -à-dire que le bloc de mesure dudit dispositif n'utilise pas de pièces en mouvement comme dans les dispositifs traditionnels à turbine, à hélice ou à membrane. Ainsi, lorsque le bloc de mesure est un oscillateur fluidique ou lorsque le bloc de mesure comprend un canal de mesure et au moins deux transducteurs ultrasonores définissant entre eux et sur au moins une partie dudit canal de mesure un trajet de mesure ultrasonore, un conditionneur d'écoulement est souvent indispensable.

En effet de tels dispositifs sont très sensibles à des perturbations générées en amont dans l'écoulement du fluide ,par exemple par une vanne ou un coude, telles qu'une structure rotationnelle des vitesses propagée par l'écoulement et qui induit des mesures fortement entachées d'erreurs.

On connait d'après la demande de brevet britannique n°2235064 un conditionneur d'écoulement qui se présente sous la forme d'une plaque placée dans une conduite en amont du bloc de mesure et qui est munie sur sa surface faisant face à l'écoulement de perforations d'axes parallèles audit écoulement. Un tel conditionneur détruit les structures tourbillonnaires présentes dans l'écoulement et homogénéise la distribution de vitesses dans l'écoulement.

Néanmoins, ce type de conditionneur présente l'inconvénient d'augmenter les pertes de charge ce qui est pénalisant lorsque l'on souhaite déterminer une quantité volumique du fluide dans des conduites de faibles diamètres avec une perte de charge minimale.

En outre, ce type de conditionneur génère malgré tout en aval dudit conditionneur d'écoulement des turbulences qui perturbent la détermination de la quantité volumique du fluide et il s'encrasse au cours du temps.
L'encrassement du conditionneur conduit inévitablement à une diminution des performances de celui-ci et à une augmentation des pertes de charge.

De plus, pour détruire efficacement les structures tourbillonnaires présentes dans l'écoulement du fluide ce type de conditionneur doit être placé suffisamment loin en amont du bloc de mesure ce qui n'est pas sans poser des problèmes de compacité.

On connait également un autre type de conditionneur d'écoulement placé en amont d'un oscillateur fluidique tel que celui décrit dans la demande de brevet européen n°0503462, l'oscillateur fluidique étant disposé symétriquement par rapport à un plan de symétrie longitudinal.

Cette demande de brevet décrit un dispositif de mesure comprenant une première chambre de grandes dimensions dans laquelle l'écoulement de fluide débouche perpendiculairement au plan de symétrie et offrant audit écoulement une brusque augmentation de la section de passage.

Le dispositif comprend également pour l'écoulement une sortie en forme de convergent qui est placée dans le plan de symétrie longitudinal et qui communique avec une seconde chambre constituant l'oscillateur fluidique.

Le conditionneur d'écoulement comprend une paroi en forme de demi-cercle qui est symétrique par rapport au plan de symétrie longitudinal et dont la concavité est disposée en vis-à-vis du convergent et des parois qui encadrent celui-ci.

Le conditionneur d'écoulement forme avec les parois qui encadrent le convergent deux passages symétriques par rapport au plan de symétrie longitudinal qui sont constitués d'une première portion convergente et d'une seconde portion divergente qui est le siège d'une recirculation d'écoulement du fluide. Chacun de ces passages reçoit une fraction de l'écoulement du fluide et l'accélère puis la ralentit avant que les deux fractions ne se mélangent et pénètrent dans le convergent.

Comme l'entrée de l'écoulement dans la première chambre est déportée par rapport au plan de symétrie longitudinal, l'écoulement débouchant dans ladite chambre se répartit de manière dissymétrique par rapport au plan de symétrie longitudinal.
Pour des débits élevés. cette dissymétrie de l'écoulement peut être encore présente dans l'oscillateur fluidique et ainsi modifier la fréquence d'oscillation ce qui affecte la mesure de la quantité volumique du fluide. En outre,la présence d'une portion divergente dans chacun des passages crée une perte de charge supplémentaire dans le conditionneur d'écoulement qui peut se révéler préjudiciable pour certaines applications.

On connaît par ailleurs un document FR 2 690 717 qui décrit en amont d'un oscillateur fluidique une chambre munie d'une entrée pour l'écoulement de fluide et comportant un obstacle disposé en face de l'entrée et profilé suivant la direction longitudinale de l'écoulement. L'obstacle présente en regard de l'entrée une surface dite d'impact de dimensions transversales inférieures à la dimension transversale de l'entrée et sur laquelle une partie de l'écoulement provenant de ladite entrée se fractionne transversalement. L'écoulement fractionné est ensuite canalisé symétriquement par rapport à la direction longitudinale de l'écoulement, accéléré et mélangé.
Toutefois, un tel conditionneur d'écoulement n'est pas entièrement satisfaisant notamment lorsque l'écoulement issu de l'entrée présente une forte dissymétrie.

La présente invention vise donc à conditionner un écoulement d'un fluide d'une première zone vers une deuxième zone située en aval de ladite première zone en générant peu de perte de charge et en reproduisant,à l'entrée de la deuxième zone, des caractéristiques d'écoulement indépendantes des caractéristiques de l'écoulement dans la première zone.

La présente invention a ainsi pour objet un procédé de conditionnement d'un écoulement d'un fluide d'une première zone comportant une entrée vers une deuxième zone située en aval de ladite première zone, ledit procédé consistant à:
- diriger ledit écoulement provenant de la première zone dans une direction longitudinale,
- soumettre ledit écoulement à une augmentation de section de passage,
- fractionner ledit écoulement sur une surface dite d'impact sensiblement transversalement à la direction longitudinale de l'écoulement,
- canaliser l'écoulement fractionné symétriquement par rapport à la direction longitudinale de l'écoulement sur une longueur déterminée, depuis le lieu de fractionnement jusqu'à la deuxième zone, sans le ralentir,
- accélérer ledit écoulement fractionné sur au moins une partie de ladite longueur déterminée,
- mélanger l'écoulement en vue d'obtenir un écoulement du fluide conditionné dans la deuxième zone. Selon l'invention ledit procédé est caractérisé en ce que la surface d'impact a une dimension transversale au moins égale à la dimension de l'entrée.
Conformément à l'invention, l'écoulement du fluide dirigé longitudinalement est soumis à une augmentation de section de passage et vient se fractionner sur la surface d'impact sensiblement perpendiculaire à cette direction ce qui a pour effet d'annuler la vitesse moyenne dudit écoulement suivant la direction longitudinale et de la transformer en composantes transversales selon le principe de conservation de la quantité de mouvement.
En outre, le procédé selon l'invention crée une distribution stationnaire de l'écoulement fractionné afin d'éviter toute oscillation de l'écoulement.
Ainsi, le fractionnement permet de détruire les structures tourbillonnaires présentes dans l'écoulement et d'une manière générale, permet de contrôler la quantité de mouvement de l'écoulement.
L'écoulement du fluide fractionné est ensuite canalisé symétriquement par rapport à la direction longitudinale de l'écoulement sur une longueur déterminée depuis le lieu de fractionnement jusqu'à la deuxième zone.
Sur au moins une partie de cette longueur déterminée, l'écoulement est accéléré de manière symétrique par rapport à la direction longitudinale que possède l'écoulement avant son fractionnement afin d'obtenir une distribution de vitesses plus homogène dans ladite fraction d'écoulement.
Il est particulièrement important que l'écoulement fractionné soit canalisé sans être ralenti. Un tel ralentissement peut par exemple se produire avec une augmentation de section de passage ou avec un obstacle sur le passage dudit écoulement.
En effet, un tel ralentissement provoquerait une perte de charge et modifierait la distribution de vitesses dans la fraction d'écoulement ce qui nuirait à l'efficacité du conditionnement du fluide.
L'écoulement fractionné et accéléré pénètre ensuite dans une zone située immédiatement en amont de la deuxième zone et qui a pour fonction de mélanger ledit écoulement fractionné. Cette zone permet d'ajuster le niveau de turbulence locale et la vitesse moyenne de chaque fraction d'écoulement à des valeurs stables avant que l'écoulement conditionné ne pénètre dans ladite deuxième zone.
Là encore, il est très important que lors du mélange l'écoulement ne soit pas ralenti.

Selon une caractéristique du procédé,on peut accélérer chaque fraction d'écoulement immédiatement en aval de la zone de fractionnement sur une partie de la longueur déterminée de l'étape de canalisation ou sur toute sa longueur.

Selon une autre caractéristique avantageuse du procédé, l'écoulement du fluide dirigé longitudinalement est soumis à une brusque augmentation de section de passage ce qui a pour effet de créer un phénomène de recirculation d'écoulement de fluide au droit de ladite augmentation de section de passage, immédiatement en aval de la zone de fractionnement.

Ce phénomène de recirculation prélève une partie de la quantité de mouvement de l'écoulement du fluide avant son fractionnement sur la surface d'impact, contribuant ainsi à transformer de manière contrôlée la dynamique dudit écoulement présente à sa périphérie.

Par ailleurs, il est avantageux d'accélérer simultanément chaque fraction d'écoulement au contact de ce phénomène de recirculation d'écoulement

Lorsque l'on donne naissance au phénomène de recirculation d'écoulement de fluide au droit de l'augmentation de section de passage,l'accélération simultanée de chaque fraction d'écoulement au contact de ce phénomène de recirculation permet de stabiliser ledit phénomène.

Au cours de l'étape de canalisation, il est prévu de faire passer chaque fraction d'écoulement dans un coude situé en aval de la zone de fractionnement.

Chaque fraction d'écoulement au droit du coude peut aussi être accélérée simultanément.

Il est aussi possible d'améliorer l'efficacité du conditionnement en accélérant l'écoulement du fluide au cours de l'étape de mélange. Le conditionnement du fluide selon l'invention a pour effet de conférer à l'écoulement qui débouche dans la deuxième zone des caractéristiques indépendantes de celles de l'écoulement dans la première zone.

La présente invention a également pour objet un conditionneur d'écoulement d'un fluide comprenant une entrée et une sortie pour l'écoulement du fluide, ledit conditionneur étant symétrique par rapport à un plan de symétrie longitudinal (P) dans lequel sont contenues lesdites entrée et sortie et comprenant:
- une chambre reliée à la dite entrée et qui est partiellement délimitée par une surface d'impact de direction sensiblement contenue dans un plan transversal et sur laquelle ledit écoulement se fractionne, ladite surface d'impact étant située en vis-à-vis de ladite entrée,
- des moyens de canalisation de l'écoulement fractionné jusqu'à la sortie du conditionneur et qui comportent au moins deux passages pour l'amenée dudit écoulement fractionné jusqu'à une zone de mélange de l'écoulement fractionné située immédiatement en amont de ladite sortie,lesdits moyens de canalisation comprenant au moins une portion convergente et ne ralentissant pas l'écoulement,
la distance entre l'entrée du conditionneur et la surface d'impact ainsi que la dimension de la section offerte à l'écoulement dans les moyens de canalisation par rapport à celle de l'entrée dudit conditionneur étant choisies de manière à ce que l'écoulement du fluide ait une direction longitudinale jusqu'à ladite surface d'impact et n'oscille pas dans la chambre. Selon l'invention, le conditionneur est caractérisé en ce que la surface d'impact a une dimension transversale au moins égale à la dimension de l'entrée. Ce conditionneur fonctionne de la manière indiquée ci-dessus. Ce conditionneur permet de détruire les structures tourbillonnaires et de s'affranchir des hétérogénéités présentes dans la distribution des vitesses de l'écoulement.
Comme le conditionneur d'écoulement selon l'invention est symétrique par rapport au plan de symétrie longitudinal et, en raison de la présence de la zone de mélange, chaque fraction d'écoulement est soumise à une perte de charge à peu près égale et se répartit donc de manière sensiblement égale dans chaque passage ce qui contribue à obtenir une distribution des vitesses uniforme dans chaque fraction d'écoulement.

En outre,le conditionneur d'écoulement conforme à l'invention est le siège d'une perte de charge controlée et faible par rapport aux conditionneurs de l'art antérieur.

Compte tenu du fait que les moyens de canalisation comprennent au moins une portion convergente et ne ralentissent pas l'écoulement jusqu'à la sortie du conditionneur, c'est -à-dire que l'écoulement fractionné est au moins accéléré sur une partie de la longueur desdits moyens de canalisation, celà permet d'obtenir dans l'écoulement une distribution de vitesses qui est uniformisée vers l'aval.

Le fait que l'écoulement soit accéléré contribue, d'une part, à l'efficacité du conditionneur et, d'autre part, à sa compacité.

Il est également possible de prévoir que l'écoulement soit continûment accéléré sur toute la longueur des moyens de canalisation.

Selon une caractéristique de l'invention, la portion convergente peut être reliée directement à la chambre dans laquelle débouche l'écoulement permettant ainsi d'augmenter la vitesse de l'écoulement fractionné juste après son fractionnement.

Les moyens de canalisation comprennent une portion de section de passage constante disposée en aval de la portion convergente et qui sert à canaliser chaque fraction d'écoulement vers la sortie du conditionneur.

Selon une autre caractéristique de l'invention, les moyens de canalisation du conditionneur d'écoulement comprennent une portion convergente qui n'est pas reliée directement à la chambre.
Cette portion convergente peut également être ajoutée à celle qui est directement reliée à la chambre en vue de mieux répartir la zone du passage sur laquelle la fraction d'écoulement est accélérée.

Les moyens de canalisation de l'écoulement fractionné comportent au moins un coude pour permettre notamment d'orienter la fraction d'écoulement correspondante vers la sortie du conditionneur.

Il est avantageux de prévoir que le coude soit inclus dans une portion convergente afin d'accroître la compacité du conditionneur d'écoulement selon l'invention.

Les moyens de canalisation peuvent par exemple comporter deux coudes aux concavités inversées voire plus de deux coudes.

La configuration comportant deux coudes successifs confère un encombrement plus réduit qu'avec un seul coude.

Avantageusement, il peut être prévu que la chambre offre à l'écoulement du fluide provenant de l'entrée une brusque augmentation de section de passage qui a pour effet de créer un phénomène de recirculation d'écoulement de fluide au droit de ladite augmentation de section de passage comme celà a été expliqué précédemment.

Cette caractéristique accroît l'efficacité du conditionneur d'écoulement selon l'invention.

Selon encore d'autres caractéristiques de l'invention:
- la distance entre l'entrée du conditionneur et la surface d'impact est inférieure à quatre fois le diamètre de ladite entrée et la section de passage minimale des moyens de canalisation est inférieure à la section de ladite entrée,
- la section de passage minimale des moyens de canalisation est au moins égale au double de la section de passage de la sortie dudit conditionneur,
- la dimension entre l'entrée et la sortie dudit conditionneur est comprise entre une et cinq fois le diamètre de passage de l'entrée du conditionneur,
- la dimension transversale du conditionneur est comprise entre 1,5 et 5 fois le diamètre de passage de l'entrée du conditionneur. Cette dimension permet de stabiliser le phénomène de recirculation d'écoulement qui prend naissance au droit de la brusque augmentation de section de passage,
- le conditionneur comprend une enceinte reliant les entrée et sortie dudit conditionneur et un obstacle disposé au milieu de ladite enceinte,
- l'obstacle est muni d'une surface frontale qui forme au moins partiellement la surface d'impact dudit conditionneur,
- l'entrée et la sortie du conditionneur sont alignées .

Selon un mode réalisation de l'invention :
- l'enceinte et l'obstacle présentent chacun respectivement une surface intérieure et une surface extérieure qui forment entre elles deux passages latéraux entourant l'obstacle,
- l'obstacle est formé d'un corps central et de deux portions latérales s'étendant principalement dans une direction transversale par rapport au plan de symétrie longitudinal P à partir dudit corps central,
- chaque portion latérale définit avec la partie de l'enceinte en vis-à-vis un premier coude pour la fraction d'écoulement correspondant ainsi qu'une portion convergente reliée directement à la chambre et incluant ledit coude,
- chaque portion latérale est par exemple en forme de lobe,
- chaque lobe présente à partir du corps central une forme évasée qui se termine par une extrémité de surface extérieure convexe,
- la surface extérieure convexe a un profil de forme circulaire de rayon R1 compris entre 0,1 et 3,5 fois le diamètre de l'entrée du conditionneur,
- la partie de l'enceinte en vis-à-vis de la surface extérieure convexe de chaque portion latérale présente une surface intérieure concave,
- la surface intérieure concave a un profil de forme circulaire de rayon R2 compris entre 0,3 et 4 fois le diamètre de l'entrée du conditionneur,
- les cercles de rayons respectifs R1 et R2 ont pour centre respectif O1 et O2, lesdits centres O1 et O2 étant situés sur une droite parallèle au plan de symétrie longitudinal P et perpendiculaire à la surface frontale de l'obstacle et sont espacés l'un de l'autre d'une distance inférieure au diamètre de l'entrée du conditionneur,
- le corps central possède une portion arrière qui définit avec la partie de l'enceinte en vis-à-vis un deuxième coude pour la fraction de l'écoulement correspondant,
- la portion arrière est par exemple en forme de V.

Selon un autre mode réalisation de l'invention, le conditionneur possède une symétrie de révolution autour de la direction longitudinale de l'écoulement du fluide et dans lequel l'enceinte et l'obstacle présentent chacun respectivement une surface intérieure et une surface extérieure formant entre elles un passage unique entourant ledit obstacle, au moins deux éléments étant disposés entre lesdites surfaces à une certaine distance de l'entrée pour séparer une partie dudit passage en deux passages de mêmes dimensions.

Le conditionneur conforme à l'invention peut aussi bien s'appliquer à un gaz qu'à de l'eau, voire même à un fluide tel que par exemple un carburant pour les véhicules automobiles.

L'invention a également pour objet un dispositif de détermination d'une quantité volumique d'un fluide en écoulement, comprenant un bloc de mesure et un conditionneur d'écoulement tel que décrit précédemment et qui est disposé en amont dudit bloc de mesure par rapport au sens d'écoulement du fluide. Le bloc de mesure est disposé dans l'alignement du conditionneur d'écoulement.

Selon des caractéristiques particulières du dispositif :
- le bloc de mesure est un oscillateur fluidique,
- le bloc de mesure comprend au moins un canal de mesure de section transversale ayant une forme parallélépipédique et au moins deux transducteurs ultrasonores définissant entre eux et sur au moins une partie dudit canal de mesure un trajet de mesure ultrasonore.

D'autres caractéristiques et avantages apparaîtront au cours de la description qui va suivre donnée à titre d'exemple non limitatif et faite en référence aux dessins annexés sur lesquels:
- la figure 1 est une vue de dessus schématique du conditionneur d'écoulement selon un premier mode de réalisation de l'invention,
- la figure 2 est une vue schématique en perspective du conditionneur d'écoulement représenté à la figure 1 et qui est disposé en amont d'un oscillateur fluidique de l'art antérieur,
- la figure 2a est une vue schématique en perspective du conditionneur d'écoulement selon une première variante du mode de réalisation de l'invention représenté aux figures 1 et 2,
- la figure 2b illustre le fonctionnement du conditionneur d'écoulement représenté à la figure 1,
- la figure 3 est une vue de dessus schématique du conditionneur d'écoulement selon une deuxième variante du mode de réalisation de l'invention représenté aux figures 1 et 2,
- la figure 4 est une vue de dessus schématique du conditionneur d'écoulement selon une troisième variante du mode de réalisation de l'invention représenté aux figures 1 et 2,
- la figure 5 est une vue de dessus schématique du conditionneur d'écoulement selon une quatrième variante du mode de réalisation de l'invention représenté aux figures 1 et 2,
- la figure 6 est une vue schématique suivant la flèche A du conditionneur d'écoulement représenté à la figure 5,
- la figure 7 est une vue de dessus schématique du conditionneur d'écoulement selon un deuxième mode de réalisation de l'invention,
- la figure 8 est une vue schématique suivant la flèche B du conditionneur d'écoulement représenté à la figure 7,
- la figure 9 est une vue de dessus schématique du conditionneur d'écoulement représenté à la figure 1 et sur laquelle est indiqué la répartition du champ de vitesses de l'écoulement lorsque ledit écoulement à l'entrée dudit conditionneur présente un profil de distribution de vitesses homogène,
- la figure 10 est une vue de dessus schématique du conditionneur d'écoulement représenté à la figure 1 et sur laquelle est indiqué la répartition du champ de vitesses de l'écoulement lorsque ledit écoulement à l'entrée dudit conditionneur présente un profil de distribution de vitesses hétérogène,
- la figure 11 représente deux courbes de calibration (◇,+) obtenues à partir d'un compteur de gaz comprenant un oscillateur fluidique tel que représenté sur la figure 2, sans le conditionneur d'écoulement selon l'invention, ces courbes étant respectivement obtenues lorsque l'écoulement a le profil représenté à la figure 9 et celui représenté à la figure 10,
- la figure 12 représente deux courbes de calibration (◇,+) obtenues à partir du compteur de gaz comprenant un oscillateur fluidique tel que représenté sur la figure 2 avec le conditionneur d'écoulement selon l'invention et pour les profils d'écoulement respectivement représentés à la figure 9 et à la figure 10.

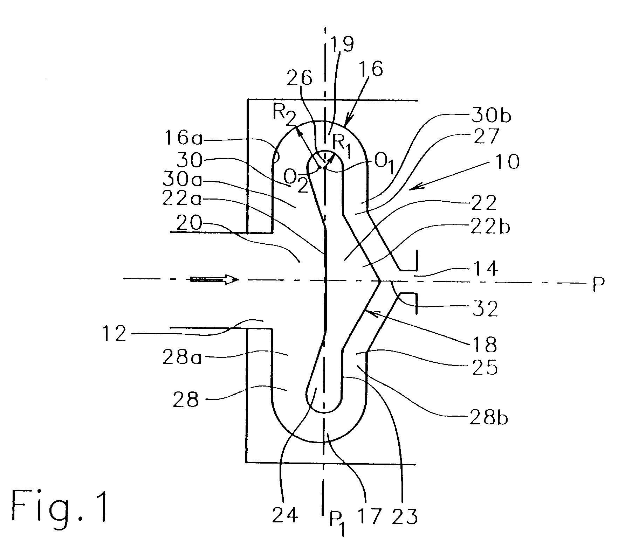

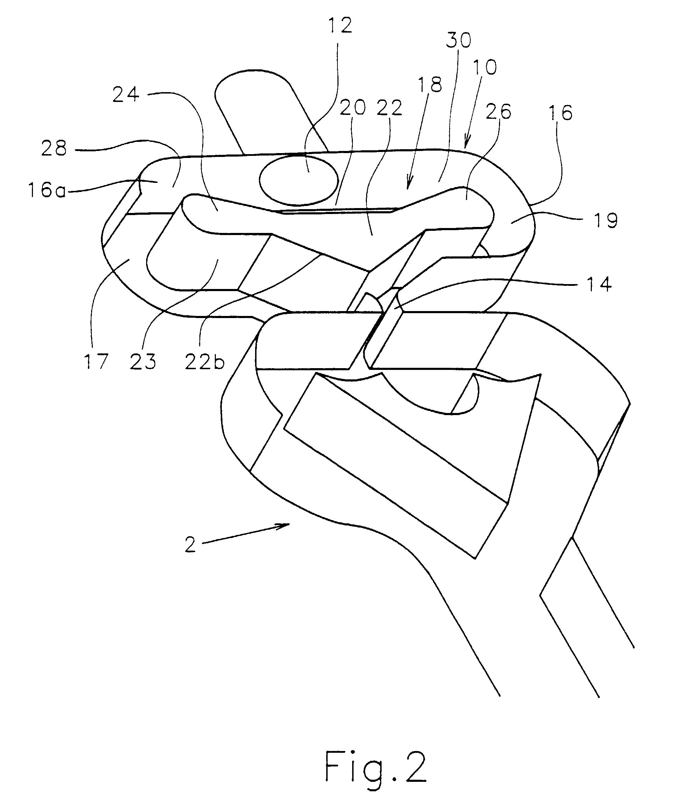

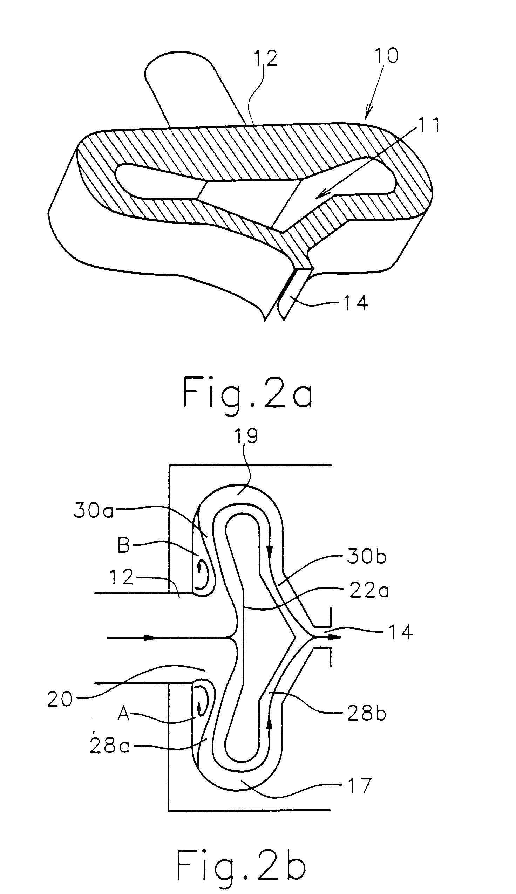

Comme représenté aux figures 1 et 2, selon un premier mode de réalisation de l'invention, un conditionneur 10 d'écoulement d'un fluide comprend une entrée 12 et une sortie 14 pour ledit écoulement .
La sortie 14 du conditionneur 10 est raccordée en aval à un dispositif de détermination d'une quantité volumique du fluide comprenant un bloc de mesure 2 qui se présente sous la forme d'un oscillateur fluidique tel que par exemple décrit dans la demande de brevet français n° 9205301.

L'entrée 12 et la sortie 14 sont, d'une part, disposées dans un même plan P qui est un plan de symétrie longitudinal pour le conditionneur d'écoulement et,d'autre part, alignées suivant la direction longitudinale de l'écoulement qui est définie par la direction que ladite entrée confère audit écoulement et qui est toujours comprise dans ledit plan P.
L'entrée 12 a une section de passage qui confère à l'écoulement des caractéristiques axisymétriques et sa forme est par exemple circulaire telle que représentée sur la figure 2.

Il est aussi possible de prévoir une entrée dont la section de passage confère à l'écoulement un caractère bidimensionnel et a une forme, par exemple rectangulaire.

La sortie 14 est une fente dont la section de passage est de forme rectangulaire et qui confère à l'écoulement un caractère bidimensionnel.

L'oscillateur fluidique est également symétrique par rapport au plan de symétrie P ce qui permet de conserver les caractéristiques de l'écoulement du fluide ainsi conditionné sans ajouter de perturbations supplémentaires telles que celles occasionnées par un coude qui serait placé entre la sortie du conditionneur et l'oscillateur fluidique.

Le conditionneur 10 comprend également une enceinte 16 qui relie l'entrée 12 et la sortie 14 ainsi qu'un obstacle 18 disposé au milieu de ladite enceinte entre l'entrée et la sortie.

Une chambre 20 reliée à l'entrée 12 est prévue dans l'enceinte 16 pour recevoir l'écoulement du fluide provenant de ladite entrée.

L'obstacle 18 est formé d'un corps central 22 possédant une surface frontale 22a perpendiculaire au plan de symétrie longitudinal P et située en vis-à-vis de l'entrée 12 dans un plan transversal P1.

Dans le mode de réalisation représenté sur les figures 1 et 2 ,la surface frontale 22a de l'obstacle 18 est perpendiculaire à la direction longitudinale de l'écoulement définie par l'entrée 12 et est appelée surface d'impact

Cette surface d'impact 22a est plane, mais il faut toutefois remarquer que ladite surface peut être par exemple légèrement concave ou convexe sans pour autant affecter l'efficacité du conditionneur d'écoulement 10.

La chambre 20 est définie entre l'entrée 12 et la surface frontale 22a de l'obstacle 18.

Ainsi que représenté sur la figure 2, l'enceinte 16 présente une surface intérieure 16a et l'obstacle 18 présente une surface extérieure 23, ces deux surfaces formant entre elles deux passages symétriques 28, 30 qui entourent ledit obstacle et mettent en communication la chambre 20 avec la sortie 14 du conditionneur d'écoulement 10.

Il convient de remarquer que l'obstacle 18 n'est pas indispensable pour la réalisation de l'invention.
En effet, comme représenté sur la figure 2a, il est concevable de ne prévoir que deux passages identiques aux passages 28 et 30 des figures 1 et 2, s'étendant de l'entrée 12 à la sortie 14, mais en supprimant l'obstacle entre lesdits passages. La figure 2a représente en perspective schématique, sous le même angle d'inclinaison que celui de la figure 2, un tel conditionneur d'écoulement vu de l'extérieur, dans lequel un espace vide 11 remplace l'obstacle entre les passages.

Ainsi que représenté sur les figures 1 et 2,l'obstacle est également formé de deux portions latérales 24 ,26 ayant chacune la forme d'un lobe et s'étendant à partir du corps central 22 principalement dans une direction transversale par rapport au plan de symétrie P. Chaque lobe a une forme qui s'évase légèrement à partir du corps central 22 et qui se termine par une extrémité dont la surface extérieure est convexe et par exemple circulaire.

Chaque portion latérale en forme de lobe 24,26 de l'obstacle 18 définit avec la partie de l'enceinte 16 qui est en vis-à-vis un premier coude 17,19 pour l'écoulement et dont la concavité est dirigée vers le plan de symétrie P.

Chaque extrémité convexe de forme circulaire de chacune des portions latérales en forme de lobe 24,26 possède un rayon R1 qui est compris entre 0,1 et 3,5 fois le diamètre de l'entrée 12 du conditionneur 10 et ,par exemple est égal à 0,45 fois le diamètre de ladite entrée (fig.1).
La partie de la surface intérieure 16a de l'enceinte 16 qui forme la partie concave du premier coude 17,19 a une forme circulaire dont le rayon R2 est compris entre 0,3 et 4 fois le diamètre de l'entrée 12 du conditionneur 10 et, par exemple est égal à 0,35 fois ledit diamètre.
Les cercles précités ont pour centres respectifs O1 et O2 qui sont situés sur une droite contenue dans un plan parallèle au plan de symétrie P et dans le plan de la figure 1. La distance entre ces deux centres permet de choisir le degré de convergence souhaité dans le premier coude 17,19.
La distance entre O1 et O2 est inférieure à une fois le diamètre de l'entrée 12 du conditionneur, et par exemple est égale à 0,05 fois ce diamètre.
Il convient de noter que ces deux centres O1 et O2 peuvent être confondus.
Le corps central 22 de l'obstacle 18 possède une portion arrière 22b qui définit avec la partie de l'enceinte 16 qui est en vis-à-vis un deuxième coude 25,27 pour l'écoulement et dont la concavité est inversée par rapport à celle du premier coude 17,19.
La portion arrière 22b du corps central 22 de l'obstacle 18 a par exemple une forme en V dont la pointe est située en face de la sortie 14 du conditionneur d'écoulement.

Chaque passage 28,30 possède une section de passage offerte à l'écoulement qui est décroissante depuis l'entrée dudit passage jusqu'à la sortie 14 du conditionneur d'écoulement ce qui signifie que l'écoulement empruntant chacun des passages 28,30 est accéléré sur au moins une partie dudit passage.

Comme représenté sur la figure 1, chaque passage 28,30 comprend une portion convergente 28a,30a qui est reliée directement à la chambre 20 et dans laquelle est située le premer coude 17,19, la convergence étant plus forte à l'entrée dudit passage que dans ledit coude.
A la sortie du premier coude 17,19, chaque passage comprend une portion 28b,30b ayant une section de passage constante disposée entre la portion convergente 28a,30a et une zone dite de mélange 32 qui est située immédiatement en amont de la sortie 14 du conditionneur afin de mettre en communication les deux passages 28,30.
Cette portion 28b,30b présente d'abord une forme rectiligne perpendiculaire au plan de symétrie longitudinal P et une section de passage constante, puis ladite portion forme un deuxième coude brutal 25,27 et adopte une forme rectiligne de section de passage constante en direction dudit plan P jusqu'à la zone de mélange 32.
Il convient de choisir une section de passage minimale de chaque passage qui soit au moins égale à la section de passage de la sortie 14 du conditionneur et par exemple égale à 1,5 fois ladite section de passage. En effet, celà permet de bénéficier d'une convergence de l'écoulement suffisante pour obtenir une distribution de vitesses en sortie de conditionneur qui soit la plus homogène possible.

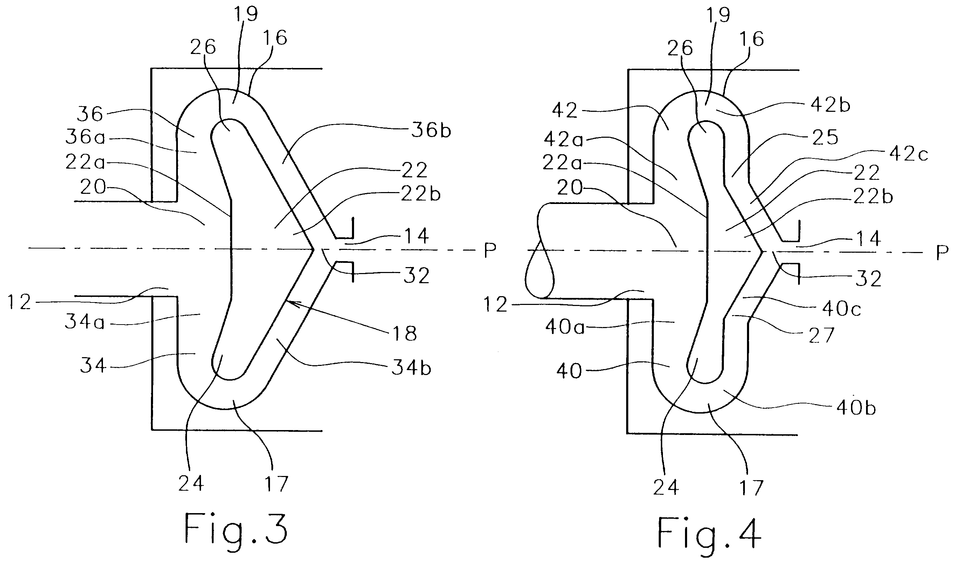

Selon une deuxième variante représentée à la figure 3 où seules les références des passages ont été modifiées, il est possible de ne prévoir dans le conditionneur qu'un seul coude 17,19 dont l'extension est inférieure à 180° et ainsi la dernière portion 34b,36b de chaque passage 34,36 adopte une forme rectiligne jusqu'à la zone de mélange 32.

La figure 4 illustre une troisième variante de réalisation du conditionneur où seules les références des passages ont été modifiées et dans laquelle chaque passage comprend une portion convergente qui n'est pas directement reliée à la chambre 20. Sur cette figure, chaque passage 40,42 comprend une première portion rectiligne 40a,42a perpendiculaire au plan de symétrie longitudinal P et qui s'étend depuis la chambre 20 jusqu'au premier coude 17, 19. Une deuxième portion convergente 40b,42b commence à l'entrée du dit coude 17, 19 et se termine à la sortie de celui-ci. La troisième et dernière portion 40c,42c de chaque passage 40,42 conserve la même forme générale que la deuxième portion 28b,30b déja décrite en relation avec la figure 1.
Néanmoins, dans cette variante les dimensions des sections de passage de chaque passage doivent être plus petites que celles du conditionneur d'écoulement représenté à la figure 1 afin que le conditionneur conserve son efficacité. Cependant, la perte de charge induite par cette variante de réalisation sera légèrement plus élevée qu'avec le conditionneur d'écoulement représenté à la figure 1.

Selon une autre variante du mode de réalisation représenté à la figure 1 mais qui n'est pas représentée sur les figures, chaque passage possède une section de passage qui est continûment décroissante sur toute sa longueur.
Avec une telle configuration, la convergence du passage à son entrée, c'est-à-dire immédiatement en aval de la chambre 20, est moins prononcée que celle du conditionneur de la figure 1.

Selon encore une autre variante non représentée sur les figures,le premier coude 17,19 n'a pas une forme convergente et la zone de convergence peut être placée soit entre la chambre 20 et ledit premier coude, soit entre ce premier coude et la sortie du conditionneur, soit à ces deux endroits à la fois.

Pour que l'écoulement du fluide ait une direction longitudinale depuis l'entrée du conditionneur jusqu'à la surface d'impact et n'oscille pas dans la chambre 20 il faut choisir de manière appropriée la distance entre l'entrée 12 dudit conditionneur 10 et la surface d'impact 22a ainsi que la dimension de la section de passage de chaque passage 28,30 par rapport à la dimension de ladite entrée.

Ainsi, la Demanderesse s'est aperçue qu'en choisissant la distance définie ci-dessus inférieure à quatre fois le diamètre de l'entrée et la plus petite section de passage de chaque passage inférieure à la moitié de la section de ladite entrée le conditionneur est particulièrement efficace.
Il faut toutefois noter qu'il est possible de réaliser un conditionneur d'écoulement en adoptant une distance supérieure à celle indiquée ci-dessus à condition de choisir la section de passage minimale de chaque passage strictement inférieure à la moitié de la section d'entrée.
Inversement, si l'on adopte une section de passage minimale de chaque passage supérieure à la moitié de la section de l'entrée, il faut choisir une distance entre l'entrée et la surface d'impact qui soit inférieure à quatre fois le diamètre de l'entrée 12.
Par exemple, la distance entre l'entrée 12 du conditionneur et la surface d'impact 22a est égale à 0,65 fois le diamètre de l'entrée et la plus petite section de passage de chaque passage est égale à 0,3 fois la section de l'entrée.

Comme représenté sur la figure 1, la dimension transversale de la surface d'impact 22a est égale au diamètre de l'entrée 12 du conditionneur d'écoulement mais cette dimension peut aussi être plus grande que ledit diamètre sans pour celà nuire à l'efficacité dudit conditionneur.

La dimension transversale du conditionneur tel que décrit en référence aux figures 1 et 2 est comprise entre 1,5 et 5 fois le diamètre de passage de l'entrée 12 et, par exemple est égale à 3,65 fois ce diamètre.

La dimension entre l'entrée 12 et la sortie 14 du conditionneur encore appelée dimension longitudinale est comprise entre 1 et 5 fois le diamètre de passage de l'entrée 12 et, par exemple est égale à 1,75 fois ce diamètre.

Ainsi, les dimensions du conditionneur conforme à l'invention confèrent à celui-ci un encombrement réduit lui permettant d'être placé aisément entre deux raccords d'une canalisation de fluide.
Le fonctionnement du conditionneur d'écoulement selon l'invention va maintenant être décrit en référence à la figure 2b.

L'écoulement du fluide pénètre dans la chambre 20 suivant une direction longitudinale en étant soumis à une brusque augmentation de la section de passage ce qui donne lieu à un phénomène de recirculation symétrique noté A,B de part et d'autre de l'entrée 12, dans chacune des portions convergentes 28a,30a des passages 28,30.

L'écoulement du fluide heurte ensuite la surface d'impact 22a perpendiculairement à celle ci et se fractionne sur ladite surface d'impact, transformant la direction longitudinale de la vitesse moyenne dudit écoulement en composantes transversales. En raison du principe de conservation de la quantité de mouvement, l'écoulement ainsi fractionné va être redistribué dans toutes les directions transversales qui lui sont offertes, cassant ainsi toute structure d'écoulement existante à l'entrée du conditionneur.

En raison de la configuration et des dimensions du conditionneur d'écoulement, il se crée une distribution stationnaire de l'écoulement fractionné qui évite toute oscillation dudit écoulement dans la chambre 20.

Les deux fractions d'écoulement empruntent chacune de manière sensiblement symétrique l'une des portions convergentes 28a,30a des passages respectifs 28,30 et viennent au contact de la recirculation d'écoulement A,B correspondante. Les portions convergentes ont pour fonction, d'une part, de stabiliser la recirculation d'écoulement et, d'autre part, d'homogénéiser le champ de vitesses de l'écoulement de fluide.

Cependant, de bons résultats peuvent également être obtenus sans ce phénomène de recirculation qui se produit seulement si l'évolution de la section d'entrée suivant la direction d'écoulement se fait par un accroissement brutal (angle supérieur à 7°).

Chaque fraction d'écoulement emprunte un premier coude 17 ou 19 et est ensuite canalisée vers la zone de mélange 32 par la portion 28b ou 30b de section de passage constante du passage 28 ou 30 correspondant.

La zone de mélange 32 possède des dimensions suffisamment petites pour accélérer l'écoulement et améliorer ainsi son homogénéité à la sortie 14 du conditionnement d'écoulement 10.

Ainsi, les caractéristiques de l'écoulement à la sortie 14 du conditionneur 10 sont indépendantes des caractéristiques de l'écoulement à l'entrée 12.

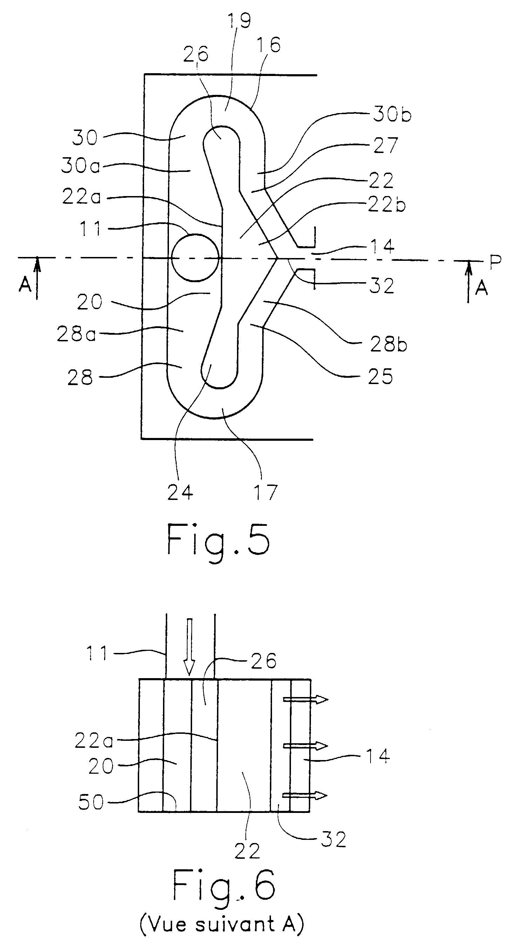

Le conditionneur selon l'invention peut également prendre la forme de la variante représentée aux figures 5 et 6 où seuls les éléments modifiés portent des références nouvelles par rapport aux figures 1 et 2.Sur les figures 5 et 6, l'entrée 11 et la sortie 14 sont décalées de 90° dans le plan de symétrie longitudinal P.
Selon cette variante qui diffère peu du mode de réalisation décrit en référence aux figures 1 et 2, l'entrée 11 du conditionneur d'écoulement définit une direction longitudinale pour l'écoulement débouchant dans la chambre 20 de l'enceinte 16 qui est parallèle à la direction définie par la surface frontale 22a de l'obstacle 18.

Dans cette configuration, l'écoulement du fluide pénétrant dans la chambre 20 vient heurter une surface dite d'impact 50 située en vis-à-vis de l'entrée 11, perpendiculaire à la surface frontale 22a de l'obstacle 18 et qui délimite partiellement ladite chambre.
Le fonctionnement de cette variante est identique à celui décrit précédemment.
Sur les figures 5 et 6, l'entrée 11 est de forme axisymétrique et par exemple circulaire alors que la sortie 14 est une fente qui confère à l'écoulement un caractère bidimensionnel.

Le premier mode réalisation (fig.1 et 2) du conditionneur d'écoulement conforme à l'invention peut également s'appliquer en amont d'un dispositif de détermination d'une quantité volumique de fluide comprenant un bloc de mesure à ultrasons.
Un tel bloc de mesure comprend par exemple un canal de mesure de section transversale ayant une forme parallélépipèdique, par exemple rectangulaire, la sortie en forme de fente dudit conditionneur correspondant à l'entrée de ce canal.
Deux transducteurs ultrasonores sont montés sur l'une des parois du canal de mesure ou sur deux parois opposées de ce canal de manière à définir entre eux et sur au moins une partie dudit canal de mesure un trajet de mesure ultrasonore.

La demande internationale de brevet WO9109282 décrit ce type de dispositif à bloc de mesure ultrasonore.

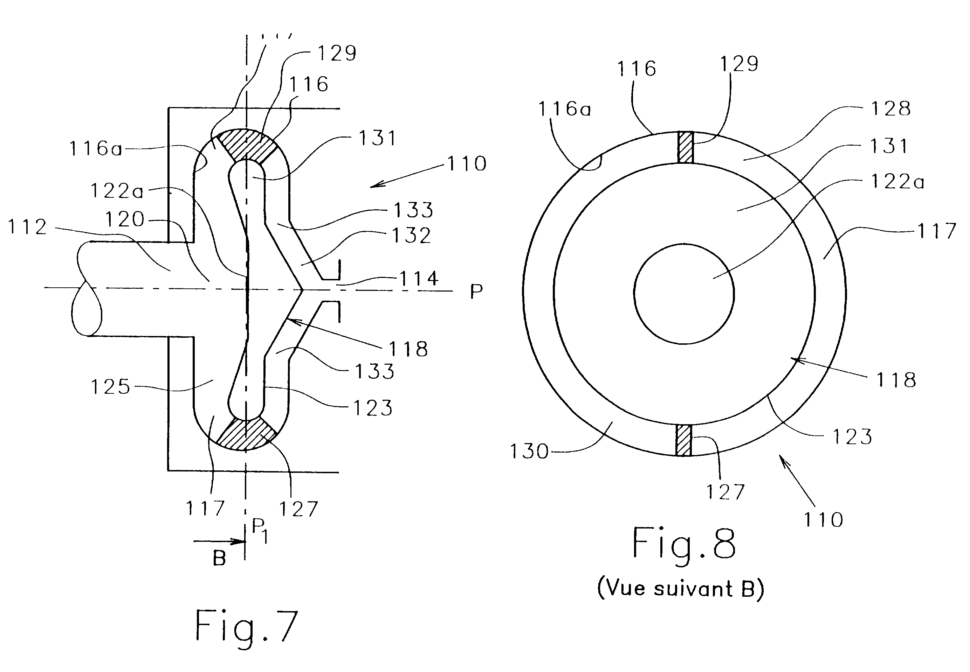

Selon un deuxième mode de réalisation du conditionneur d'écoulement conforme à l'invention et représenté aux figures 7 et 8,l'entrée 112 et la sortie 114 du conditionneur d'écoulement 110 sont alignées suivant la direction longitudinale de l'écoulement qui est définie par la direction que ladite entrée confère audit écoulement.

L'entrée 112 et la sortie 114 ont une forme axisymétrique par exemple circulaire.
De manière analogue à ce qui a été décrit en référence aux figures 1 et 2, le conditionneur d'écoulement 110 comprend une enceinte 116 reliant l'entrée 112 et la sortie 114 ainsi qu'un obstacle 118 disposé au milieu de ladite enceinte et qui est muni d'une surface frontale 122a formant au moins partiellement la surface d'impact dudit conditionneur .
Une chambre 120 reliée à l'entrée 112 du conditionneur est prévu dans l'enceinte 116 pour recevoir l'écoulement du fluide débouchant suivant la direction longitudinale.
L'obstacle 118 est formé d'un corps central 122 possédant la surface frontale 122a perpendiculaire au plan de symétrie longitudinal P et située en vis-à-vis de l'entrée 112 dans un plan transversal P1.
La chambre 120 est définie entre l'entrée 112 et la surface frontale 122a de l'obstacle 118.

Dans le mode de réalisation représenté sur les figures 7 et 8, la surface frontale 122a de l'obstacle 118 est perpendiculaire à la direction longitudinale de l'écoulement définie par l'entrée 112.
Conformément à ce deuxième mode de réalisation, le conditionneur d'écoulement possède une symétrie de révolution autour de la direction longitudinale de l'écoulement du fluide.
L'enceinte 116 et l'obstacle 118 présentent chacun respectivement une surface intérieure 116a et une surface extérieure 123 qui forment entre elles un passage unique entourant ledit obstacle.

Ainsi que représenté sur les figures 7 et 8, deux éléments 127,129 sont fixés entre la surface intérieure 116a de l'enceinte 116 et la surface extérieure 123 de l'obstacle 118 de manière à séparer sur une partie de sa longueur le passage unique en deux passages 128,130 de mêmes dimensions et dont la longueur est celle desdits éléments.
Ces éléments 127,129 revêtent par exemple la forme de plaques planes aussi minces que possible pour ne pas perturber l'écoulement et dont la plus grande surface est disposée parallèlement audit écoulement.
Il est possible de donner aux plaques 127,129 la longueur ainsi que l'emplacement que l'on souhaite entre les deux surfaces 116a et 123, mais il ne faut toutefois pas les disposer immédiatement en aval de la chambre 120.
En effet , l'écoulement fractionné sur la surface d'impact 122a doit se répartir de façon sensiblement identique dans une portion de passage commune amont 125 dans toutes les directions transversales qui lui sont offertes sur une longueur suffisante avant d'être canalisé, ceci afin d'éviter la propagation de structures tourbillonnaires vers l'aval du conditionnneur.

On peut également envisager de disposer plus de deux éléments entre les surfaces intérieure 116a de l'enceinte 116 et extérieure 123 de l'obstacle 118 de manière à former plus de deux passages de mêmes dimensions.

Comme représenté sur les figures 7 et 8, l'obstacle 118 est également formé d'une portion périphérique 131 ayant par exemple la forme d'une collerette entourant le corps central.
Avantageusement, la collerette 131 définit avec la partie de l'enceinte 116 en vis-à-vis un premier coude 117 pour l'écoulement fractionné ainsi qu'une portion convergente reliée directement à la chambre 120 et incluant ledit coude.
Les éléments en forme de plaques 127 et 129 sont par exemple situés dans le premier coude 117 en aval de la portion de passage commune 125.
Le corps central 122 de l'obstacle 118 possède une portion arrière 122b qui définit avec la partie de l'enceinte 116 en vis-à-vis un deuxième coude 133 pour l'écoulement fractionné.
La portion arrière 122b de l'obstacle 118 a par exemple une forme conique dont la pointe est située en face de la sortie 114 du conditionneur 110.
Hormis le fait que les passages pour l'écoulement fractionné ne sont pas définis immédiatement en aval de la chambre 120, après le fractionnement de l'écoulement de direction longitudinale, mais après une certaine longueur sur laquelle l'écoulement fractionné emprunte une portion de passage commune 125, le procédé de conditionnement du fluide conforme à l'invention n'est pas modifié par rapport à ce qui a été décrit précédemment.
Après que l'écoulement fractionné ait été canalisé dans la portion de passage commune amont 125 et dans les passages 128, 130 définis par les éléments en forme de plaque 127,129, ledit écoulement fractionné rejoint une portion de passage commune aval 132 jouant le rôle de la zone de mélange et dont la section de passage est par exemple continûment décroissante jusqu'à la sortie 114.

Il convient de noter que la longueur des éléments en forme de plaques 127,129 peut être plus grande que celle indiquée sur la figure 7 et ainsi l'on peut réduire la portion de passage commune 132 à une zone de faibles dimensions telle que celle décrite en référence aux figures 1 et 2 et représenté par la référence 32.

Cette configuration de révolution est particulièrement bien adaptée aux dispositifs de détermination d'une quantité volumique de fluide comprenant un bloc de mesure ultrasonore réalisé sous la forme d'un conduit dont la section transversale est de forme axisymétrique.
Le conduit de mesure est équipé de deux transducteurs ultrasonores disposés en face l'un de l'autre aux deux extrémités opposées dudit conduit, l'un desdits transducteurs pouvant par exemple être aménagé dans la partie arrière de l'obstacle 118 du conditionneur afin de ne pas perturber l'écoulement une fois que celui-ci a été conditionné.

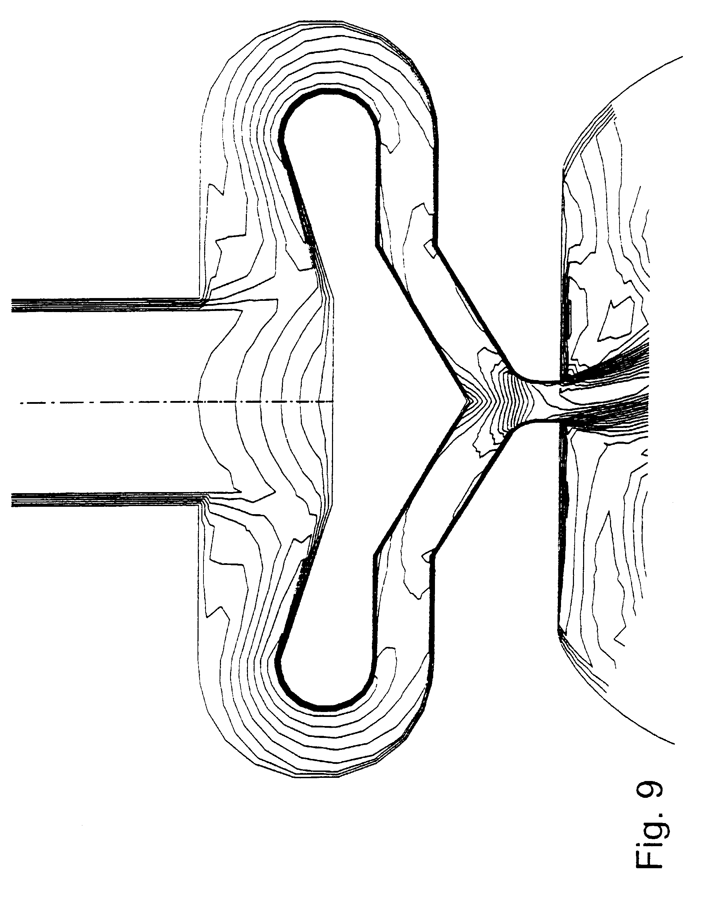

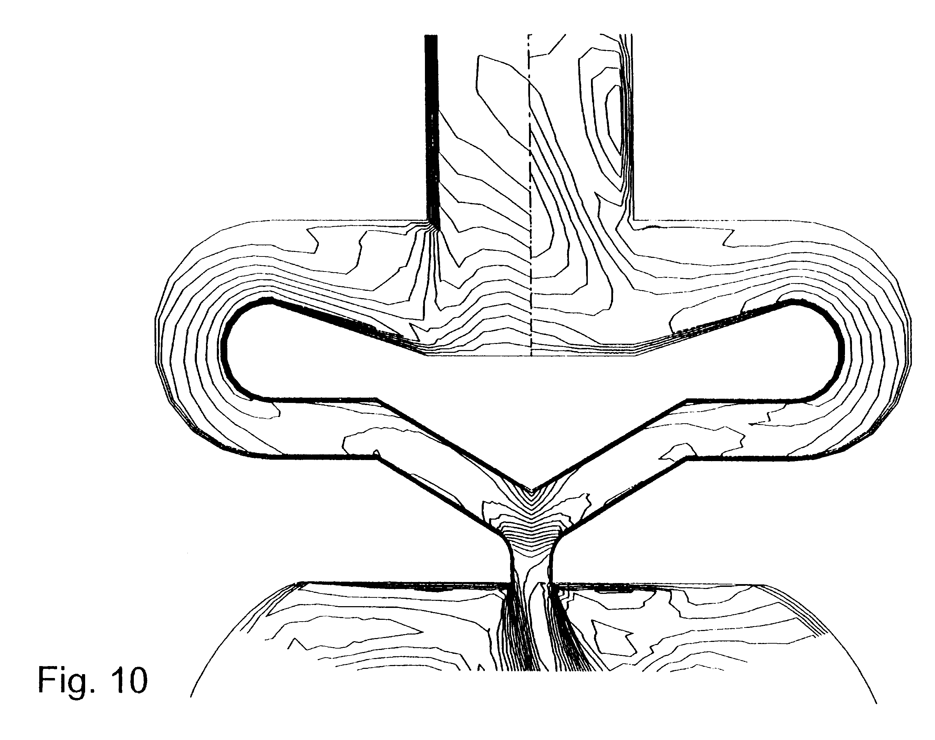

Les figures 9 et 10 indiquent la répartition du champ de vitesses de l'écoulement dans le conditionneur d'écoulement représenté aux figures 1 et 2, traduisant ainsi l'efficacité dudit conditionneur d'écoulement.

Sur la figure 9, l'écoulement du fluide provenant de l'entrée 12 est parfaitement symétrique par rapport au plan de symétrie longitudinale P et le conditionneur d'écoulement reproduit à sa sortie 14 un écoulement très homogène.
L'écoulement du fluide à l'entrée 12 du conditionneur d'écoulement représenté à la figure 10 a subi quant à lui une sévère perturbation étant donné que la partie du conduit située en amont de ladite entrée a été obstruée sur une moitié pour reproduire l'un des tests prévus par la norme OIML (Organisation Internationale de Métrologie Légale) R32.
Malgré cette perturbation qui donne lieu à une forte hétérogénéité dans la distribution des vitesses de l'écoulement à l'entrée 12 du conditionneur, ledit écoulement est réparti de façon sensiblement symétrique dans chaque passage 28,30 et les deux fractions d'écoulement deviennent très rapidement de plus en plus symétriques l'une par rapport à l'autre au fur et à mesure de leur progression dans leur passage respectif.
Après la zone de mélange 32, l'écoulement reconstitué présente une distribution de vitesses qui est homogène et qui possède sensiblement les mêmes caractéristiques que l'écoulement en sortie du conditionneur de la figure 9.
Ainsi, le conditionneur d'écoulement selon l'invention reproduit à sa sortie des caractéristiques d'écoulement indépendantes des caractéristiques de l'écoulement à l'entrée dudit conditionneur.

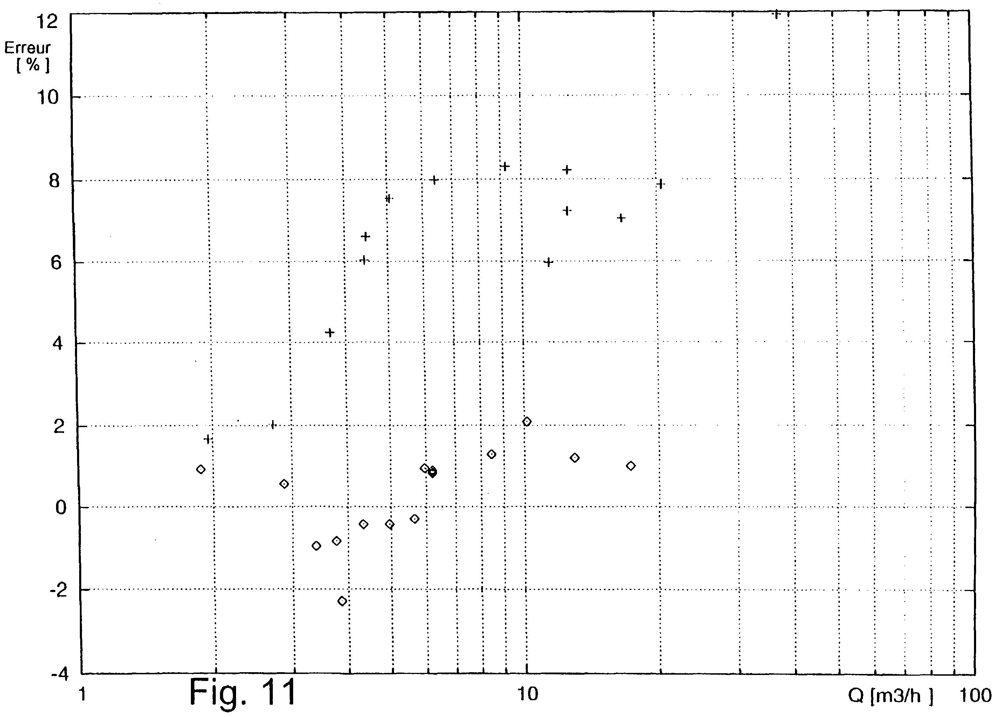

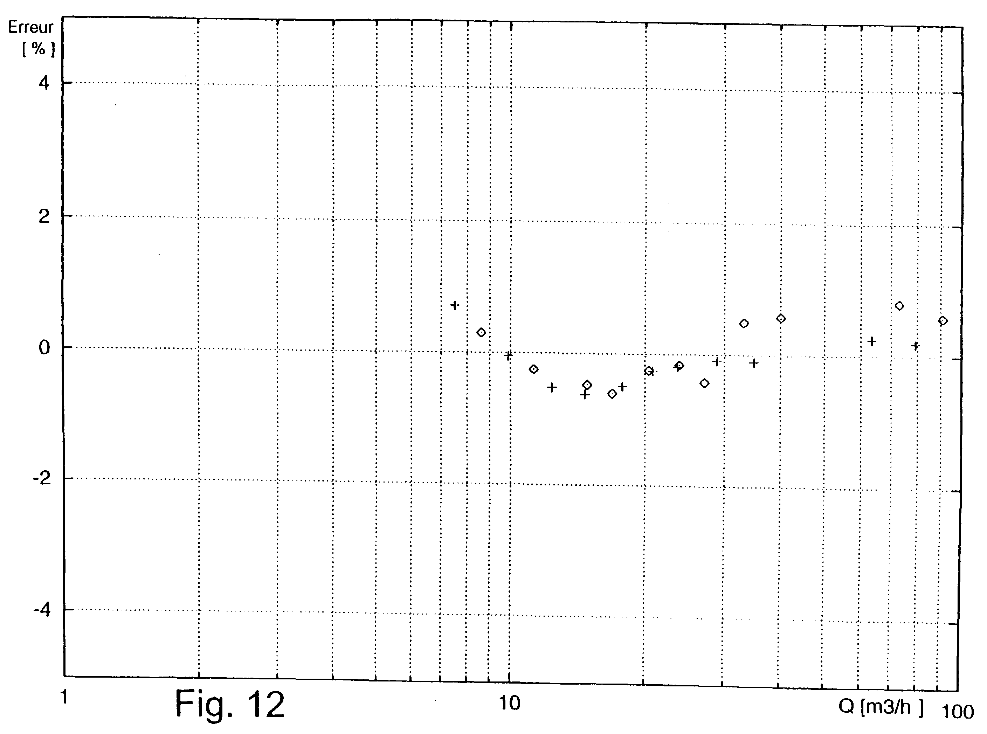

Les figures 11 et 12 sont deux graphiques qui représentent chacun deux courbes de calibration (ces courbes traduisent l'erreur faite sur la mesure du débit d'air en fonction du débit) d'un compteur de gaz qui comprend un oscillateur fluidique tel que représenté sur la figure 2 suivant les deux profils d'écoulement différents indiqués à l'entrée du conditionneur sur les figures 9 et 10.

La courbe répérée par des losanges (◇) a été obtenue avec un profil d'écoulement tel que représenté à l'entrée du conditionneur d'écoulement sur la figure 9.
La courbe répérée par des croix (+) a été obtenue avec un profil d'écoulement tel que représenté à l'entrée du conditionneur d'écoulement sur la figure 10.

La figure 11 représente les deux courbes de calibration obtenues sans conditionneur d'écoulement alors que la figure 12 représente les courbes obtenues avec le conditionneur d'écoulement représenté sur les figures 1 et 2.

La comparaison de ces deux graphiques permet de constater, d'une part, l'influence du profil de vitesses de l'écoulement à l'entrée de l'oscillateur fluidique sur la mesure effectuée par ledit oscillateur fluidique lorsque le conditionneur d'écoulement selon l'invention n'est pas présent en amont et, d'autre part, que la présence de ce conditionneur d'écoulement en amont de l'oscillateur fluidique rend celui-ci insensible aux perturbations apportées par l'écoulement en amont du conditionneur.

## Revendications

1. Procédé de conditionnement d'un écoulement d'un fluide d'une première zone comportant une entrée (12, 112) vers une deuxième zone située en aval de ladite première zone, ledit procédé consistant à:
- diriger ledit écoulement provenant de la première zone dans une direction longitudinale,
- soumettre ledit écoulement à une augmentation de section de passage,
- fractionner ledit écoulement sur une surface dite d'impact (22a, 122a) sensiblement transversalement à la direction longitudinale de l'écoulement,
- canaliser l'écoulement fractionné symétriquement par rapport à la direction longitudinale de l'écoulement sur une longueur déterminée, depuis le lieu de fractionnement jusqu'à la deuxième zone, sans le ralentir,
- accélérer ledit écoulement fractionné sur au moins une partie de ladite longueur déterminée,
- mélanger l'écoulement en vue d'obtenir un écoulement du fluide conditionné dans la deuxième zone, caractérisé en ce que la surface d'impact (22a, 122a) a une dimension transversale au moins égale à la dimension de l'entrée (12, 112).

2. Procédé selon la revendication 1, consistant à accélérer l'écoulement immédiatement en aval de la zone de fractionnement.

3. Procédé selon la revendication 1 ou 2, consistant à soumettre ledit écoulement à une brusque augmentation de section de passage créant ainsi un phénomène de recirculation (A, B) d'écoulement de fluide au droit de ladite augmentation de section de passage.

4. Procédé selon l'une des revendications 1 à 3, dans lequel l'étape de canalisation consiste notamment à faire passer l'écoulement fractionné dans un coude (17, 19; 117) situé en aval de la zone de fractionnement.

5. Procédé selon l'une des revendications 1 à 4, consistant à accélérer l'écoulement au cours de l'étape de mélange.

6. Conditionneur (10,110) d'écoulement d'un fluide comprenant une entrée (12, 112) et une sortie (14, 114) pour l'écoulement du fluide, ledit conditionneur étant symétrique par rapport à un plan de symétrie longitudinal (P) dans lequel sont contenues lesdites entrée et sortie et comprenant :
- une chambre (20,120) reliée à la dite entrée et qui est partiellement délimitée par une surface d'impact (22a,122a) de direction sensiblement contenue dans un plan transversal et sur laquelle ledit écoulement se fractionne, ladite surface d'impact étant située en vis-à-vis de ladite entrée,
- des moyens de canalisation de l'écoulement fractionné jusqu'à la sortie (14,114) du conditionneur et qui comportent au moins deux passages (28, 30; 34,36;40, 42; 125,128, 130) pour l'amenée dudit écoulement fractionné jusqu'à une zone de mélange (32, 132) de l'écoulement fractionné située immédiatement en amont de ladite sortie,lesdits moyens de canalisation comprenant au moins une portion convergente (28a,30a;34a,36a; 40b,42b; 125,128,130) et ne ralentissant pas l'écoulement,
la distance entre l'entrée (12, 112) du conditionneur et la surface d'impact (22a, 122a) ainsi que la dimension de la section offerte à l'écoulement dans les moyens de canalisation par rapport à celle de l'entrée dudit conditionneur étant choisies de manière à ce que l'écoulement du fluide ait une direction longitudinale jusqu'à ladite surface d'impact et n'oscille pas dans la chambre(20,120), caractérisé en ce que la surface d'impact (22a, 122a) a une dimension transversale au moins égale à la dimension de l'entrée (12, 112).

7. Conditionneur selon la revendication 6, dans lequel la distance entre l'entrée (12, 112) du conditionneur et la surface d'impact (22a, 122a) est inférieure à quatre fois le diamètre de ladite entrée et la section de passage minimale des moyens de canalisation (28, 30; 34, 36; 40, 42; 125,128, 130) est inférieure à la section de ladite entrée.

8. Conditionneur selon la revendication 6 ou 7, dans lequel la section de passage minimale des moyens de canalisation (28, 30; 34, 36; 40, 42; 125,128, 130) est au moins égale au double de la section de passage de la sortie dudit conditionneur.

9. Conditionneur selon l'une des revendications 6 à 8, ayant une dimension entre l'entrée (12, 112) et la sortie (14, 114) dudit conditionneur qui est comprise entre une et cinq fois le diamètre de passage de l'entrée du conditionneur .

10. Conditionneur selon l'une des revendications 6 à 9, ayant une dimension transversale qui est comprise entre 1,5 et 5 fois le diamètre de passage de l'entrée du conditionneur.

11. Conditionneur selon l'une des revendications 6 à 10, dans lequel la portion convergente (28a, 30a;34a, 36a;125) est directement reliée à la chambre(20,120).

12. Conditionneur selon l'une des revendications 6 à 10 ,dans lequel les moyens de canalisation (40, 42) comprennent une portion convergente (40b, 42b) qui n'est pas reliée directement à la chambre(20).

13. Conditionneur selon la revendication 11 ou 12, dans lequel les moyens de canalisation (28, 30; 34, 36; 40, 42) comprennent une portion de section de passage constante (28b, 30b; 34b, 36b; 40c, 42c) disposée en aval de la portion convergente.

14. Conditionneur selon l'une des revendications 6 à 13, dans lequel les moyens de canalisation (28, 30; 34, 36; 40, 42; 128, 130) de l'écoulement fractionné comportent au moins un coude (17, 19; 117).

15. Conditionneur selon l'une des revendications 6 à 14, dans lequel la chambre (20, 120) offre à l'écoulement du fluide provenant de l'entrée (12, 112) une brusque augmentation de section de passage.

16. Conditionneur selon l'une des revendications 6 à 15, comprenant une enceinte (16, 116) reliant les entrée (12, 112) et sortie (14, 114) dudit conditionneur et un obstacle (18, 118) disposé au milieu de ladite enceinte.

17. Conditionneur selon la revendication 16, dans lequel l'obstacle (18, 118) est muni d'une surface frontale (22a, 122a) qui forme au moins partiellement la surface d'impact dudit conditionneur.

18. Conditionneur selon l'une des revendications 6 à 17, dans lequel l'entrée (12, 112) et la sortie (14, 114) dudit conditionneur sont alignées .

19. Conditionneur selon l'une des revendications 16 à 18, dans lequel l'enceinte (16) et l'obstacle (18) présentent chacun respectivement une surface intérieure (16a) et une surface extérieure (23)qui forment entre elles deux passages latéraux (28, 30; 34, 36; 40, 42) entourant ledit obstacle.

20. Conditionneur selon la revendication 19, dans lequel l'obstacle (18) est formé d'un corps central (22) et de deux portions latérales (24, 26) s'étendant principalement dans une direction transversale par rapport au plan de symétrie longitudinal P à partir dudit corps central.

21. Conditionneur selon la revendication 20, dans lequel chaque portion latérale (24, 26) définit avec la partie de l'enceinte (16) en vis-à-vis un premier coude (17, 19) pour la fraction d'écoulement correspondant ainsi qu'une portion convergente (28a, 30a) reliée directement à la chambre (20) et incluant ledit coude.

22. Conditionneur selon la revendication 20 ou 21, dans lequel chaque portion latérale (24, 26) est en forme de lobe.

23. Conditionneur selon l'une des revendications 20 à 22, dans lequel chaque portion latérale (24, 26) présente à partir du corps central (22) une forme évasée qui se termine par une extrémité de surface extérieure convexe.

24. Conditionneur selon la revendication 23, dans lequel la surface extérieure convexe a un profil de forme circulaire de rayon R1 compris entre 0,1 et 3,5 fois le diamètre de l'entrée 12 du conditionneur.

25. Conditionneur selon la revendication 23 ou 24, dans lequel la partie de l'enceinte (16) en vis-à-vis de la surface extérieure convexe de chaque portion latérale (24, 26) présente une surface intérieure concave.

26. Conditionneur selon la revendication 25, dans lequel la surface intérieure concave a un profil de forme circulaire de rayon R2 compris entre 0,3 et 4 fois le diamètre de l'entrée (12) du conditionneur.

27. Conditionneur selon les revendications 24 et 26, dans lequel les cercles de rayons respectifs R1 et R2 ont pour centre respectif O1 et O2 ,lesdits centres O1 et O2 étant situés sur une droite parallèle au plan de symétrie longitudinal (P) et perpendiculaire à la surface frontale (22a)de l'obstacle (18) et sont espacés l'un de l'autre d'une distance inférieure au diamètre de l'entrée (12) du conditionneur.

28. Conditionneur selon l'une des revendications 21 à 27, dans lequel le corps central (22) possède une portion arrière (22b) qui définit avec la partie de l'enceinte (16) en vis-à-vis un deuxième coude (25, 27) pour la fraction de l'écoulement correspondant.

29. Conditionneur selon la revendication 28, dans lequel la portion arrière (22b) est en forme de V.

30. Conditionneur selon l'une des revendications 6 à 18, possédant une symétrie de révolution autour de la direction longitudinale de l'écoulement du fluide et dans lequel l'enceinte (116) et l'obstacle (118) présentent chacun respectivement une surface intérieure (116a) et une surface extérieure (123) formant entre elles un passage unique entourant ledit obstacle, au moins deux éléments (127,129) étant disposés entre lesdites surfaces à une certaine distance de l'entrée (112) pour séparer une partie dudit passage en deux passages (128,130) de mêmes dimensions.

31. Dispositif de détermination d'une quantité volumique d'un fluide en écoulement, comprenant un bloc de mesure et un conditionneur d'écoulement selon l'une des revendications 6 à 30 et qui est disposé en amont dudit bloc de mesure par rapport au sens d'écoulement du fluide, ledit bloc de mesure étant aligné avec ledit conditionneur d'écoulement.

32. Dispositif selon la revendication 31, dans lequel le bloc de mesure est un oscillateur fluidique.

33. Dispositif selon la revendication 31, caractérisé en ce que le bloc de mesure comprend au moins un canal de mesure de section transversale ayant une forme parallélépipèdique et au moins deux transducteurs ultrasonores définissant entre eux et sur au moins une partie dudit canal de mesure un trajet de mesure ultrasonore.

## Patentansprüche

1. Verfahren zur Konditionierung einer Fluidströmung von einer ersten Zone mit einem Eingang (12, 112) zu einer zweiten Zone, die stromabwärts der ersten Zone angeordnet ist, wobei das Verfahren umfaßt:
- die von der ersten Zone ausgehende Strömung wird in einer Längsrichtung geleitet,
- die Strömung wird einer Vergrößerung des Durchgangsquerschnitts unterworfen,
- die Strömung wird auf einer Prallfläche (22a, 122a) im wesentlichen quer zu der Längsrichtung der Strömung geteilt,
- die geteilte Strömung wird in bezug auf die Längsrichtung der Strömung auf einer bestimmten Länge, von dem Ort der Teilung bis zu der zweiten Zone, symmetrisch kanalisiert, ohne sie zu verlangsamen,
- die geteilte Strömung wird auf wenigstens einem Teil der bestimmten Länge beschleunigt,
- die Strömung wird, um in der zweiten Zone eine konditionierte Fluidströmung zu erhalten, gemischt, dadurch gekennzeichnet, daß die Prallfläche (22a, 122a) eine Querabmessung hat, die wenigstens gleich der Abmessung des Eingangs (12, 112) ist.

2. Verfahren nach Anspruch 1, worin die Strömung unmittelbar stromabwärts der Teilungszone beschleunigt wird.

3. Verfahren nach Anspruch 1 oder 2, worin die Strömung einer plötzlichen Vergrößerung des Durchgangsquerschnitts unterworfen wird, so daß an der Vergrößerung des Durchgangsquerschnitts ein Rezirkulationsvorgang (A, B) der Fluidströmung erzeugt wird.

4. Verfahren nach einem der Ansprüche 1 bis 3, bei dem der Kanalisierungsschritt insbesondere darin besteht, die geteilte Strömung durch einen Bogen (17, 19; 117) strömen zu lassen, der stromabwärts der Teilungszone angeordnet ist.

5. Verfahren nach einem der Ansprüche 1 bis 4, worin die Strömung während des Mischungsschritts beschleunigt wird.

6. Fluidströmungskonditionierer (10, 110) mit einem Eingang (12, 112) und einem Ausgang (14, 114) für die Fluidströmung, wobei der Konditionierer in bezug auf eine Längssymmetrieebene (P), in der der Eingang und der Ausgang liegen, symmetrisch ist, und der folgendes aufweist:
- eine Kammer (20, 120), die mit dem Eingang verbunden ist und die teilweise durch eine Prallfläche (22a, 122a) begrenzt ist, deren Richtung im wesentlichen in einer Querebene liegt und auf der sich die Strömung teilt, wobei die Prallfläche gegenüber dem Eingang angeordnet ist,
- Mittel zur Kanalisierung der geteilten Strömung bis zu dem Ausgang (14, 114) des Konditionierers, die wenigstens zwei Durchgänge (28, 30; 34, 36; 40, 42; 125, 128, 130) für den Zulauf der geteilten Strömung bis zu einer Mischzone (32, 132) der geteilten Strömung aufweisen, die unmittelbar stromaufwärts des Ausgangs angeordnet ist, wobei die Mittel zur Kanalisierung wenigstens einen konvergenten Abschnitt (28a, 30a; 34a, 36a; 40b, 42b; 125, 128, 130) aufweisen und die Strömung nicht verlangsamen,
worin der Abstand zwischen dem Eingang (12, 112) des Konditionierers und der Prallfläche (22a, 122a) sowie die Abmessung des Querschnitts, der der Strömung in den Mitteln zur Kanalisierung zur Verfügung steht, in bezug auf die Abmessung des Eingangs des Konditionierers in einer Weise gewählt sind, daß die Fluidströmung bis zu der Prallfläche eine Längsrichtung hat und in der Kammer (20, 120) nicht oszilliert, dadurch gekennzeichnet, daß die Prallfläche (22a, 122a) eine Querabmessung hat, die wenigstens gleich der Abmessung des Eingangs (12, 112) ist.

7. Konditionierer nach Anspruch 6, bei dem der Abstand zwischen dem Eingang (12, 112) des Konditionierers und der Prallfläche (22a, 122a) kleiner ist als das Vierfache des Durchmessers des Eingangs, und bei dem der minimale Durchgangsquerschnitt der Mittel zur Kanalisierung (28, 30; 34, 36; 40, 42; 125, 128, 130) kleiner ist als der Querschnitt des Eingangs.

8. Konditionierer nach Anspruch 6 oder 7, bei dem der minimale Durchgangsquerschnitt der Mittel zur Kanalisierung (28, 30; 34, 36; 40, 42; 125, 128, 130) wenigstens gleich dem Doppelten des Durchgangsquerschnitts des Ausgangs des Konditionierers ist.

9. Konditionierer nach einem der Ansprüche 6 bis 8, dessen Abmessung zwischen dem Eingang (12, 112) und dem Ausgang (14, 114) des Konditionierers zwischen dem Einfachen und dem Fünffachen des Durchmessers des Durchgangs des Eingangs des Konditionierers liegt.

10. Konditionierer nach einem der Ansprüche 6 bis 9, dessen transversale Abmessung zwischen dem 1,5-fachen und dem Fünffachen des Durchmessers des Durchgangs des Eingangs des Konditionierers liegt.

11. Konditionierer nach einem der Ansprüche 6 bis 10, bei dem der konvergente Abschnitt (28a, 30a; 34a, 36a; 125) direkt mit der Kammer (20, 120) verbunden ist.

12. Konditionierer nach einem der Ansprüche 6 bis 10, bei dem die Mittel zur Kanalisierung (40, 42) einen konvergenten Abschnitt (40b, 42b) aufweisen, der nicht direkt mit der Kammer (20) verbunden ist.

13. Konditionierer nach Anspruch 11 oder 12, bei dem die Mittel zur Kanalisierung (28, 30; 34, 36; 40, 42) einen Abschnitt (28b, 30b; 34b, 36b; 40c, 42c) mit konstantem Durchgangsquerschnitt aufweisen, der stromabwärts des konvergenten Abschnitts angeordnet ist.

14. Konditionierer nach einem der Ansprüche 6 bis 13, bei dem die Mittel zur Kanalisierung (28, 30; 34, 36; 40, 42; 128, 130) der geteilten Strömung wenigstens einen Bogen (17, 19; 117) aufweisen.

15. Konditionierer nach einem der Ansprüche 6 bis 14, bei dem die Kammer (20, 120) der von dem Eingang (12, 112) ausgehenden Fluidströmung eine plötzliche Vergrößerung des Durchgangsquerschnitts zur Verfügung stellt.

16. Konditionierer nach einem der Ansprüche 6 bis 15, mit einer Einfassung (16, 116), die den Eingang (12, 112) und den Ausgang (14, 114) des Konditionierers verbindet, und einem Hindernis (18, 118), das in der Mitte der Einfassung angeordnet ist.

17. Konditionierer nach Anspruch 16, bei dem das Hindernis (18, 118) mit einer Stirnfläche (22a, 122a) versehen ist, die wenigstens teilweise die Prallfläche des Konditionierers bildet.

18. Konditionierer nach einem der Ansprüche 6 bis 17, bei dem der Eingang (12, 112) und der Ausgang (14, 114) des Konditionierers fluchten.

19. Konditionierer nach einem der Ansprüche 16 bis 18, bei dem die Einfassung (16) und das Hindernis (18) jeweils eine innere Fläche (16a) und eine äußere Fläche (23) haben, die zwischen sich die zwei seitlichen Durchgänge (28, 30; 34, 36; 40, 42) bilden, die das Hindernis umgeben.

20. Konditionierer nach Anspruch 19, bei dem das Hindernis (18) aus einem zentralen Körper (22) und zwei seitlichen Abschnitten (24, 26) gebildet ist, die sich in bezug auf die Längssymmetrieebene P ausgehend von dem zentralen Körper in der Hauptsache in einer Querrichtung erstrecken.

21. Konditionierer nach Anspruch 20, bei dem jeder seitliche Abschnitt (24, 26) mit dem gegenüberliegenden Teil der Einfassung (16) einen ersten Bogen (17, 19) für den jeweiligen Teil der Strömung sowie einen konvergenten Abschnitt (28a, 30a) definiert, der direkt mit der Kammer (20) verbunden ist und den Bogen einschließt.

22. Konditionierer nach Anspruch 20 oder 21, bei dem jeder seitliche Abschnitt (24, 26) keulenförmig ist.

23. Konditionierer nach einem der Ansprüche 20 bis 22, bei dem jeder seitliche Abschnitt (24, 26) ausgehend von dem zentralen Körper (22) eine konisch erweiterte Form aufweist, die durch ein Ende der konvexen äußeren Fläche abgeschlossen ist.

24. Konditionierer nach Anspruch 23, bei dem die äußere konvexe Fläche eine kreisförmige Kontur mit einem Radius R1 hat, der zwischen dem 0,1- und dem 3,5-fachen des Durchmessers des Eingangs 12 des Konditionierers liegt.

25. Konditionierer nach Anspruch 23 oder 24, bei dem der Teil der Einfassung (16), der der konvexen äußeren Fläche jedes seitlichen Abschnitts (24, 26) gegenüberliegt, eine konkave innere Fläche aufweist.

26. Konditionierer nach Anspruch 25, bei dem die innere konkave Fläche eine kreisförmige Kontur mit einem Radius R2 hat, der zwischen dem 0,3- und dem 4-fachen des Durchmessers des Eingangs (12) des Konditionierers liegt.

27. Konditionierer nach den Ansprüchen 24 und 26, bei dem die jeweiligen Kreise mit den Radien R1 beziehungsweise R2 jeweils einen Mittelpunkt O1 beziehungsweise O2 haben, wobei die Mittelpunkte O1 und O2 auf einer zu der Längssymmetrieebene (P) parallelen und zu der Stirnfläche (22a) des Hindernisses (18) senkrechten Gerade liegen und um einen Abstand voneinander entfernt sind, der kleiner ist als der Durchmesser des Eingangs (12) des Konditionierers.

28. Konditionierer nach einem der Ansprüche 21 bis 27, bei dem der zentrale Körper (22) einen hinteren Abschnitt (22b) aufweist, der mit dem gegenüberliegenden Teil der Einfassung (16) einen zweiten Bogen (25, 27) für den entsprechenden Teil der Strömung definiert.

29. Konditionierer nach Anspruch 28, bei dem der hintere Abschnitt (22b) V-förmig ist.

30. Konditionierer nach einem der Ansprüche 6 bis 18, der um die Längsrichtung der Fluidströmung rotationssymmetrisch ist und bei dem die Einfassung (116) und das Hindernis (118) jeweils eine innere Fläche (116a) beziehungsweise eine äußere Fläche (123) aufweisen, die zwischen sich einen einzigen, das Hindernis umgebenden Durchgang bilden, wobei wenigstens zwei Elemente (127, 129) zwischen den Flächen in einem bestimmten Abstand vom Eingang (112) angeordnet sind, um einen Teil des Durchgangs in zwei Durchgänge (128, 130) mit gleichen Abmessungen zu trennen.

31. Vorrichtung zum Bestimmen einer Volumenmenge eines strömenden Fluids, mit einem Meßblock und einem Strömungskonditionierer nach einem der Ansprüche 6 bis 30, der bezüglich des Strömungssinns des Fluids stromaufwärts des Meßblocks angeordnet ist, wobei der Meßblock mit dem Strömungskonditionierer fluchtet.

32. Vorrichtung nach Anspruch 31, bei der der Meßblock ein Fluid-Oszillator ist.

33. Vorrichtung nach Anspruch 31, dadurch gekennzeichnet, daß der Meßblock wenigstens einen Meßkanal mit einem parallelogrammförmigen Querschnitt und wenigstens zwei Ultraschall-Meßwandler aufweist, die zwischen sich und wenigstens auf einem Teil des Meßkanals eine Ultraschall-Meßstrecke definieren.

## Claims

1. A method of conditioning a fluid flow from a first zone including an inlet (12, 112) towards a second zone situated downstream from said first zone, said method consisting in:
- directing said flow coming from the first zone into a longitudinal direction,
- subjecting said flow to an increase in flow section,
- fractioning said flow on an impact surface (22a, 122a) extending substantially transversely to the longitudinal direction of the flow,
- channeling the fractioned flow symmetrically about the longitudinal direction of the flow over a determined length from the fractioning location to the second zone, and without slowing the flow down,
- accelerating said fractioned flow over at least a portion of said determined length,
- mixing the flow in order to obtain a conditioned fluid flow in the second zone, characterized in that the impact surface (22a, 122a) has a transverse dimension that is equal to at least the inlet dimension (12, 112).

2. A method according to claim 1, consisting in accelerating the flow immediately downstream from the fractioning zone.

3. A method according to claim 1 or 2, consisting in subjecting said flow to a sudden increase in flow section, thereby generating a fluid flow recirculation phenomenon (A, B) at said increase in flow section.

4. A method according to any one of claims 1 to 3, in which the channeling step consists, in particular, in causing the fractioned flow to pass round a bend (17, 19; 117) situated downstream from the fractioning zone.

5. A method according to any one of claims 1 to 4, consisting in accelerating the flow during the mixing step.

6. A fluid flow conditioner (10, 110) comprising an inlet (12, 112) and an outlet (14, 114) for the fluid flow, said conditioner being symmetrical about a longitudinal plane of symmetry (P) in which said inlet and outlet are contained, and said conditioner comprising :
- a chamber (20, 120) connected to said inlet and partially defined by an impact surface (22a, 122a) extending in a direction substantially contained in a transverse plane and against which the flow is fractioned, said impact surface being situated facing said inlet,
- channeling means for channeling the fractioncd flow to the outlet (14, 114) of the conditioner and including at least two passages (28, 30; 34, 36; 40, 42; 125, 128, 130) for bringing the fractioned flow to a mixing zone (32, 132) for the fractioned flow situated immediately upstream from said outlet, said channeling means comprising at least one converging portion (28a, 30a; 34a, 36a; 40b, 42b; 125, 128, 130) and not slowing down the flow,
- the distance between the inlet (12, 112) of the conditioner and the impact surface (22a, 122a), and the size of the section offered to the flow in the channeling means compared with the size of the inlet section of the conditioner being selected in such a manner that the fluid flow has a longitudinal direction until it meets said impact surface and does not oscillate in the chamber (20, 120), characterized in that the impact surface (22a, 122a) has a transverse dimension that is equal to at least the inlet dimension (12, 112).

7. A conditioner according to claim 6, in which the distance between the inlet (12, 112) of the conditioner and the impact surface (22a, 122a) is less than four times the diameter of said inlet, and the minimum flow section of the channeling means (28, 30; 34, 36; 40, 42; 125, 128, 130) is less than the section of said inlet.

8. A conditioner according to claim 6 or 7, in which the minimum flow section of the channeling means (28, 30; 34, 36; 40, 42 ; 125, 128, 130) is equal to at least twice the flow section of the outlet of said conditioner.

9. A conditioner according to any one of claims 6 to 8, having a dimension between the inlet (12, 112) and the outlet (14, 114) of said conditioner lying in the range one to five times the flow diameter of the inlet of the conditioner.

10. A conditioner according to any one of claims 6 to 9, having a transverse dimension lying in the range 1.5 to 5 times the flow diameter of the inlet of the conditioner.

11. A conditioner according to any one of claims 6 to 10, in which the converging portion (28a, 30a; 34a, 36a ; 125) is directly related to the chamber (20, 120).

12. A conditioner according to any one of claims 6 to 10, in which the channeling means (40, 42) include a converging portion (40b, 42b) which is not directly connected to the chamber (20).

13. A conditioner according to claim 11 or 12, in which the channeling means (28, 30; 34, 36; 40, 42) include a portion of constant flow section (28b, 30b; 34b, 36b ; 40c, 42c) disposed downstream from the converging portion.

14. A conditioner according to any one of claims 6 to 13, in which the channeling means (28, 30 ; 34, 36 ; 40, 42 ; 128, 130) for the fraction flow include at least one bend (17, 19; 117).

15. A conditioner according to any of claims 6 to 14, in which the chamber (20, 120) presents the fluid flow coming from the inlet (12, 112) with a sudden increase in flow section.

16. A conditioner according to any one of claims 6 to 15, comprising an enclosure (16, 116) interconnecting the inlet (12, 112) and the outlet (14, 114) of said conditioner, and an obstacle (18, 118) disposed in the middle of said enclosure.

17. A conditioner according to claim 16, in which the obstacle (18, 118) is provided with a front surface (22a, 122a) which forms at least a part of the impact surface of said conditioner.

18. A conditioner according to any one of claims 6 to 17, in which the inlet (12, 112) and the outlet (14, 1 14) of said conditioner are in alignment.

19. A conditioner according to any one of claims 16 to 18, in which the enclosure (16) and the obstacle (18) respectively present an inside surface (16a) and an outside surface (23) forming between them two lateral passages (28, 30; 34, 36; 40, 42) surrounding said obstacle.

20. A conditioner according to claim 19, in which the obstacle (18) is formed by a central body (22) and two lateral portions (24, 26) extending from said central body mainly in a direction that is transverse to the longitudinal plane of symmetry P.

21. A conditioner according to claim 20, in which each lateral portion (24, 26) co-operates with the facing portion of the enclosure (16) to define a first bend (17, 19) for the corresponding flow fraction, and also a converging portion (28a, 30a) that is directly connected to the chamber (20) and that includes said bend.

22. A conditioner according to claim 20 or 21, in which each lateral portion (24, 26) is in the form of a lobe.

23. A conditioner according to any one of claims 20 to 22, in which each lateral portion (24, 26) is flared in shape going away from the central body and terminates in an end having an outside surface that is convex.

24. A conditioner according to claim 23, in which the convex outside surface has a profile that is circular in shape of radius R1 lying in the range 0.1 to 3.5 times the diameter of the inlet of the conditioner.

25. A conditioner according to claim 23 or 24, in which the portion of the enclosure (16) facing the convex outside surface of each lateral portion (24, 26) has an inside surface that is concave.

26. A conditioner according to claim 25, in which the concave inside surface has a profile of circular shape with radius R2 lying in the range 0.3 to 4 times the diameter of the inlet (12) of the conditioner.

27. A conditioner according to claims 24 and 26, in which the circles of respective radii R1 and R2 have respective centers O1 and O2, said centers O1 and O2 being situated on a straight line parallel to the longitudinal plane of symmetry (P) and perpendicular to the front surface (22a) of the obstacle (18), and being spaced apart from each other by a distance that is less than the diameter of the inlet (12) of the conditioner.

28. A conditioner according to any one of claims 21 to 27, in which the central body (22) has a rear portion (22b) which co-operates with the facing portion of the enclosure (16) to define a second bend (25, 27) for the corresponding flow fraction.

29. A conditioner according to claim 28, in which the rear portion (22b) is V-shaped.

30. A conditioner according to any one of claims 6 to 18, that is circularly symmetrical about the longitudinal direction of the fluid flow and in which the enclosure (116) and the obstacle (118) respectively present an inside surface (116a) and an outside surface (123) which together fonn a single passage surrounding said obstacle, at least two elements (127, 129) being disposed between said surfaces at a certain distance from the inlet (112) in order to separate a portion of said passage into two passages (128, 130) of the same dimensions.

31. A device for determining a volume-related quantity of a flowing fluid, the device comprising a measurement block and a fluid flow conditioner according to any one of claims 6 to 30 and that is disposed upstream from said measurement block in the fluid flow direction, said measurement block being in alignment with said fluid flow conditioner.

32. A device according to claim 31, in which the measurement block is a fluidic oscillator.

33. A device according to claim 31, characterized in that the measurement block comprises at least one measurement channel in the fonn of a parallelepiped and at least two ultrasound transducers defining an ultrasound measurement path between them extending along at least a portion of the measurement channel.
